# EUROPEAN PATENT SPECIFICATION

(11) **EP 3 838 856 B1**
(45) Date of publication and mention of the grant of the patent: **13.07.2022**
(21) Application number: 20020634.0
(22) Date of filing: 18.12.2020
(51) Int. Cl.: C03C 1/00, C03B 37/05, C03C 3/062, C03C 3/087, C03C 4/00, C03C 13/06

(54) **STONE WOOL PRODUCTION METHOD**
HERSTELLUNG VON STEINWOLLE
PRODUCTION DE LAINE DE ROCHE

(30) Priority: 18.12.2019 PL 43228019
(43) Date of publication of application: 23.06.2021
(73) Proprietor: Petralana S.A., 40-732 Katowice (PL)
(72) Inventor: Kluge, Mateusz Janusz, 41-605 Swietochlowice (PL); Polak, Piotr Fabian, 41-813 Zabrze (PL)
(74) Representative: Zielinski, Wojciech Leszek

(56) References cited:
- WO-A1-92/12940
- WO-A1-99/28250
- WO-A1-2015/055758
- US-A1- 2002 086 790

## Description

The present invention concerns a method of producing stole wool of a specific composition using steel slag as a component of raw materials used for lava production, which is fed to a cascade spinner comprising rotors, which uses the centrifugal force of the rotors and the air blowing from the rotor crowns.

The production of stone (and glass) wool has been known since the mid-19th century. The second half of the 20th century saw the beginning of the commercial use of products made of stone wool due to its beneficial properties related to thermal insulation, sound absorption, and non-flammability. With the increasing use of stone/mineral wool and the increasingly stringent health safety requirements for building materials, requirements for stone wool also began to be imposed. Much emphasis is placed on the possibility of causing cancer after inhalation of fibres of an inappropriate composition and size.

The current patent literature is very rich in wool composition descriptions e.g. PL189180, production methods e.g. EP1101746A1, or production equipment e.g. SU01797601, PL197822B1. Patent Document WO 2015/055758 A1 describes a method of production of stone wool using a cascade spinner comprising rotors.

For example, the PL/EP 3057909 patent description relates to man-made vitreous fibres or, more specifically, a method of manufacturing man-made vitreous fibres (MMVF) using a fiberising apparatus comprising a set of at least three rotors, each mounted for rotation around a different substantially horizontal axis. Each rotor has a driving means ensuring a set acceleration field for the first and subsequent rotors. In the method acc. to PL/EP 3057909, a mineral melt with a partially specified composition of oxides is poured onto the periphery of the first rotor.

The aim of the present solution was to achieve a product that satisfies stringent safety requirements using only the available raw material. Unexpectedly, the aim was achieved by modifying the entire process and achieving the desired product using a specific waste material.

According to the present invention, the method of producing stone wool is characterised in that, to obtain wool with a composition of:
SiO₂ in the range of 31.16% ÷ 44.86%
Al₂O₃ in the range of: 18.12% ÷ 29.97%
CaO in the range of: 14.13% ÷ 24.81%
MgO in the range of: 5.67% ÷ 15.44%
CaO+MgO in the range of: 24.03% ÷ 37.68%
Na₂O in the range of: 0% ÷ 4.87%
K₂O in the range of: 0% ÷ 4.63%
Na₂O+K₂O in the range of: 0% ÷ 6.95%
Fe₂O₃ in the range of: 0% ÷ 11.56%
TiO₂ in the range of: 0% ÷ 4.32%
P₂O₅ in the range of: 0% ÷ 4.15%
SO₃ in the range of: 0% ÷ 4.78%
MnO in the range of: 0% ÷ 4.15%
BaO in the range of: 0% ÷ 4.89%
Cr₂O₃ in the range of: 0% ÷ 4.25%
SrO in the range of: 0% ÷ 4.36%
ZrO₂ in the range of: 0% ÷ 4.88%
ZnO in the range of: 0% ÷ 4.02%
PbO in the range of: 0% ÷ 3.99%
and with biological durability preventing the carcinogenic effect of wool,
raw steel slag in the amount of 3÷15 [%] v/v is added to a mixture of raw materials used for stone wool production.

The entire mixture is melted in a furnace, after which lava at a temperature of 1,350-1,550°C is gravitationally fed by a chute to a cascade spinner, comprising four rotors with diameters of:
1 rotor - from 150 mm to 250 mm
2 rotor - from 200 mm to 300 mm
3 rotor - from 350 mm to 450 mm
4 rotor - from 350 mm to 450 mm,
   to the first rotor. The rotors rotate around their long axes at speeds of:
   1 rotor - from 3,000 to 4,500 rpm, rotating anticlockwise (looking from the front of the cascade spinner),
   2 rotor - from 5,000 to 7,500 rpm, rotating clockwise (looking from the front of the cascade spinner),
   3 rotor - from 5,500 to 8,000 rpm, rotating anticlockwise (looking from the front of the cascade spinner),
   4 rotor - from 5,500 to 8,000 rpm, rotating clockwise (looking from the front of the cascade spinner).

Then lava from the first rotor is fed to the second rotor, then from the second rotor to the third rotor, and then from the third rotor to the fourth rotor, with the angle at which the stream of lava enters the second rotor from the first rotor being 100-150°. Plates are mounted on the crowns of the second, third, and fourth rotors:
o on the second rotor
   first plate, 7 pieces, inclined to the crown axis at an angle of 0° to 5° second plate, 2 pieces, inclined to the crown axis at an angle of 2° to 12° third plate, 2 pieces, inclined to the crown axis at an angle of 9° to 19° fourth plate, 2 pieces, inclined to the crown axis at an angle of 16° to 26° fifth plate, 2 pieces, inclined to the crown axis at an angle of 23° to 33° sixth plate, 9 pieces, inclined to the crown axis at an angle of 30° to 40°
o on the third rotor
   first plate, 15 pieces, inclined to the crown axis at an angle of 0° to 5° second plate, 2 pieces, inclined to the crown axis at an angle of 2° to 12° third plate, 2 pieces, inclined to the crown axis at an angle of 9° to 19° fourth plate, 2 pieces, inclined to the crown axis at an angle of 16° to 26° fifth plate, 2 pieces, inclined to the crown axis at an angle of 23° to 33° sixth plate, 21 pieces, inclined to the crown axis at an angle of 30° to 40°
o on the fourth rotor
   first plate, 16 pieces, inclined to the crown axis at an angle of 0° to 5° second plate, 1 piece, inclined to the crown axis at an angle of 5° to 15° third plate, 12 pieces, inclined to the crown axis at an angle of 15° to 25° fourth plate, 3 pieces, inclined to the crown axis at an angle of 25° to 35° fifth plate, 11 pieces, inclined to the crown axis at an angle of 35° to 45° sixth plate, 1 piece, inclined to the crown axis at an angle of 30° to 40° seventh plate, 2 pieces, inclined to the crown axis at an angle of 20° to 30° eighth plate, 1 piece, inclined to the crown axis at an angle of 8° to 18° ninth plate, 1 piece, inclined to the crown axis at an angle of 1° to 11°
to control the angle of the air supplied from the crowns of the second, third, and fourth rotors.

Air flow in these crowns is from 10,000 Nm³/h to 20,000 Nm³/h, giving air blow speed directly at the crown outlets from 80 m/s to 180 m/s. To control the temperature of four rotors, a mixture of deionised water and reverse osmosis water is used, with a proportion of deionised water from 50% to 90% and of reverse osmosis water from 50% to 10% and with a mixture temperature of 5-40°C, which is fed to the rotors in the following quantities:
to the first rotor - from 0.5 l/min to 15.0 1/min
to the second rotor - from 1.5 1/min to 25.0 1/min
to the third rotor - from 3.5 1/min to 30.0 1/min
to the fourth rotor - from 3.5 1/min to 30.0 l/min.

Preferably, raw steel slag in the amount of 5-10% v/v is added to the raw materials from which lava is created. Preferably, the rotor diameters are:
1 rotor - from 160 mm to 200 mm
2 rotor - from 230 mm to 270 mm
3 rotor - from 350 mm to 390 mm
4 rotor - from 350 mm to 390 mm

Preferably, the rotors rotate at speeds of:
1 rotor - from 3,500 to 4,500 rpm
2 rotor - from 5,500 to 6,500 rpm
3 rotor - from 6,300 to 7,200 rpm
4 rotor - from 6,500 to 7,500 rpm

Preferably, the angle at which the lava enters is 120-140°. On the second crown surrounding the second rotor, the following plates are mounted:
first plates, preferably inclined to the crown axis at an angle of 0° to 3°
second plates, preferably inclined to the crown axis at an angle of 4° to 10°
third plates, preferably inclined to the crown axis at an angle of 11° to 17°
fourth plates, preferably inclined to the crown axis at an angle of 18° to 24°
fifth plates, preferably inclined to the crown axis at an angle of 25° to 31°
sixth plates, preferably inclined to the crown axis at an angle of 32° to 38°.

On the third crown surrounding the third rotor, the following plates are mounted:
first plates, preferably inclined to the crown axis at an angle of 0° to 3°
second plates, preferably inclined to the crown axis at an angle of 4° to 10°
third plates, preferably inclined to the crown axis at an angle of 11° to 17°
fourth plates, preferably inclined to the crown axis at an angle of 18° to 24°
fifth plates, preferably inclined to the crown axis at an angle of 25° to 31°
sixth plates, preferably inclined to the crown axis at an angle of 32° to 38°.

On the fourth crown surrounding the fourth rotor, the following plates are mounted:
first plates, preferably inclined to the crown axis at an angle of 0° to 3°
second plates, preferably inclined to the crown axis at an angle of 7° to 13°
third plates, preferably inclined to the crown axis at an angle of 17° to 23°
fourth plates, preferably inclined to the crown axis at an angle of 27° to 33°
fifth plates, preferably inclined to the crown axis at an angle of 37° to 43° sixth
plates, preferably inclined to the crown axis at an angle of 32° to 38° seventh
plates, preferably inclined to the crown axis at an angle of 22° to 28° eighth
plates, preferably inclined to the crown axis at an angle of 10° to 16° ninth
plates, preferably inclined to the crown axis at an angle of 3° to 9°.

Preferably, air flow in the crowns is from 12,000 Nm³/h to 18,000 Nm³/h. Preferably, air blow speed directly at the crown outlets is from 100 m/s to 160 m/s. Preferably, the water mixture consists of 70-90% of deionised water and 30-10% of reverse osmosis water. Preferably, the temperature of the water mixture is 10-30°C.

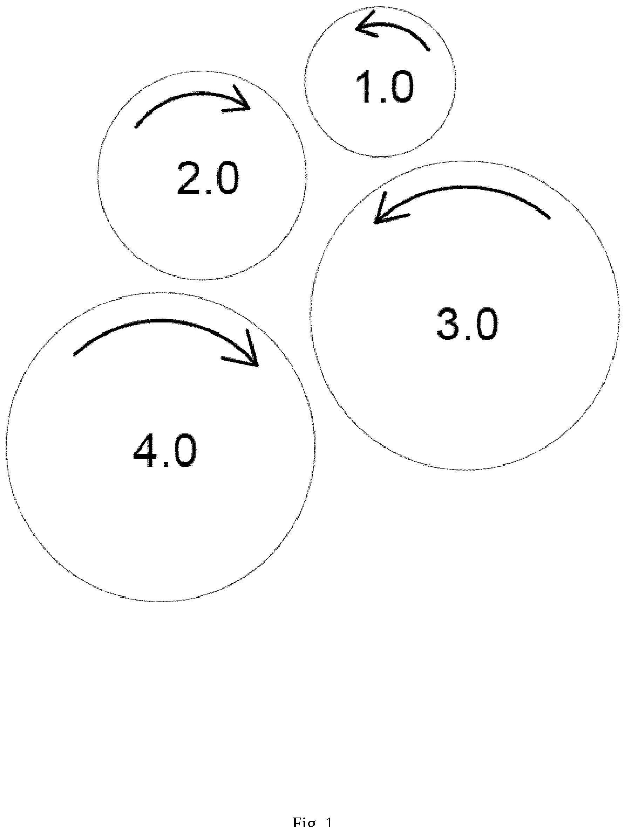

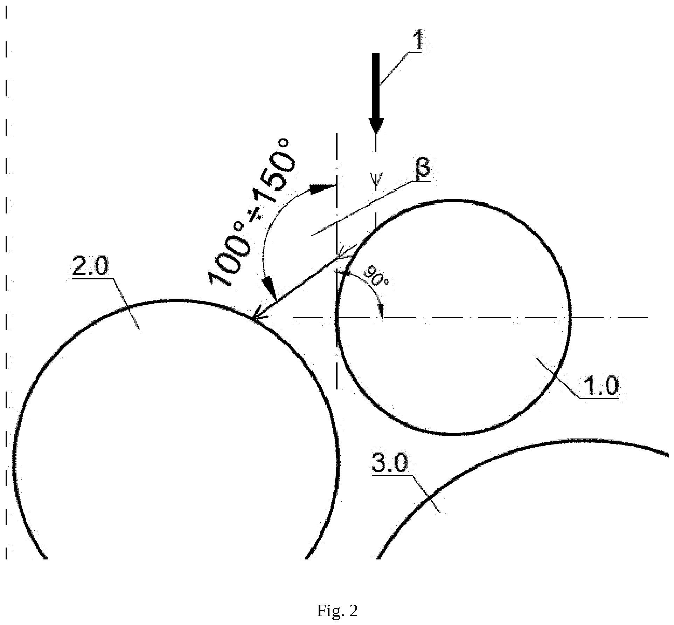

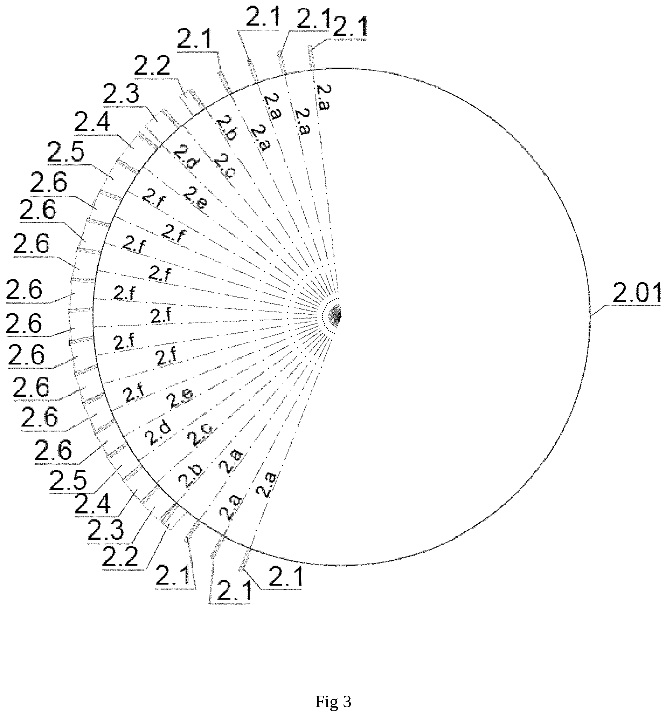

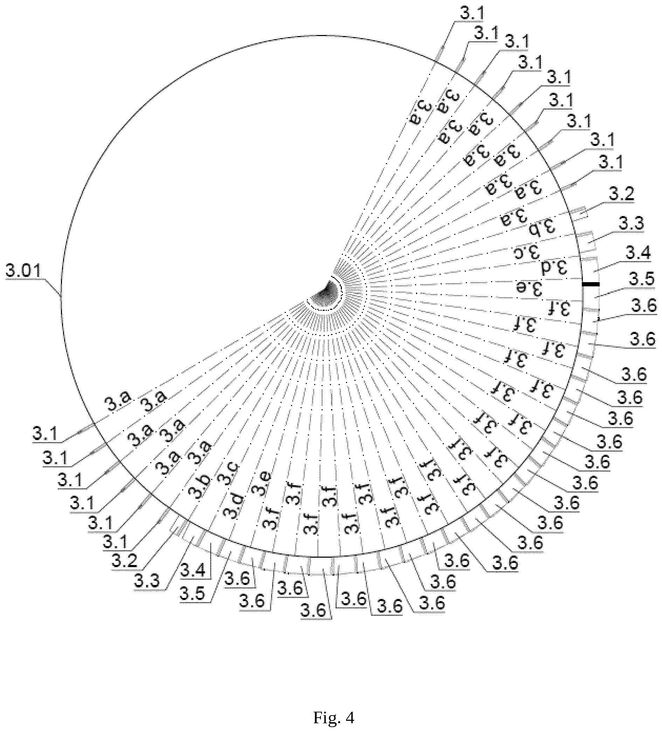

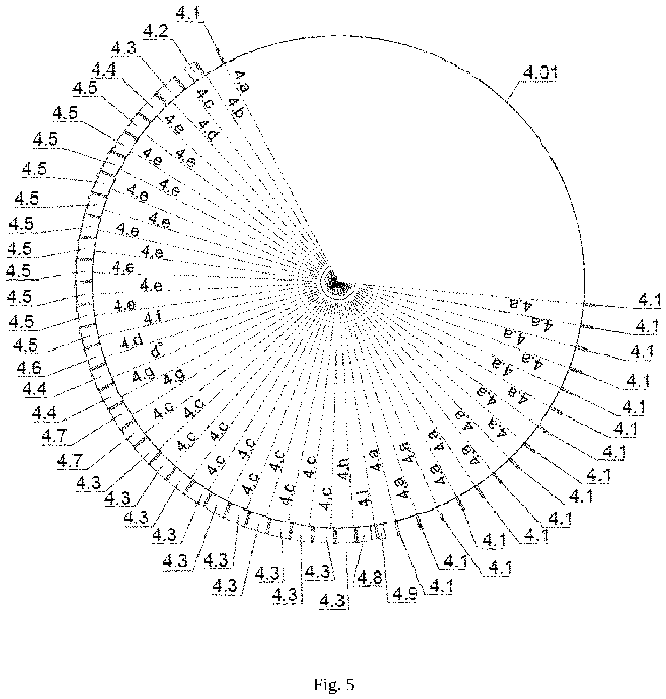

One embodiment of the invention is shown in a schematic figure, where Fig. 1 refers to the positions of rotors 1.0, 2.0, 3.0, and 4.0 in relation to each other and the rotation directions around their axes, Fig. 2 shows angle β at which lava 1 enters rotor 2.0 from rotor 1.0, Fig. 3 - structure of plates 2.1, 2.2, 2.3, 2.4, 2.5, and 2.6 on second crown 2.01 of rotor 2.0, Fig. 4 - structure of plates, 3.2, 3.3, 3.4, 3.5, and 3.6 on third crown 3.01 of rotor 3.0, and Fig. 5 - structure of plates 4.1, 4.2, 4.3, 4.4, 4.5, 4.6, 4.7, 4.8, and 4.9 on fourth crown 4.01 of rotor 4.0.

### Embodiment:

I. Stone wool characterised in that it is biologically durable, preventing carcinogenic effects of chemical composition:
   SiO₂ in the range of: 37.72%
   Al₂O₃ in the range of: 22.9%
   CaO in the range of: 20.2%
   MgO in the range of: 10.85%
   CaO+MgO in the range of: 31.05%
   Na₂O in the range of: 1.80%
   K₂O in the range of: 0.173%
   Na₂O+K₂O in the range of: 1.973%
   Fe₂O₃ in the range of: 4.7%
   TiO₂ in the range of: 0.89%
   P₂O₅ in the range of: 0.089%
   SO₃ in the range of: 0.1%
   MnO in the range of: 0.41%
   BaO in the range of: 0.015%
   Cr₂O₃ in the range of: 0.088%
   SrO in the range of: 0.023%
   ZrO₂ in the range of: 0.018%
   ZnO in the range of: 0.001%
   PbO in the range of: <0.001%
   was produced by melting raw materials in the form of rocks with the addition of steel slag. The amount of fed steel slag was 7% v/v. The melting process occurred in a coke-fired shaft furnace. To improve the melting efficiency in the shaft furnace, hot air was pumped through the nozzles in it. The temperature of the lava created as a result of the melting process was approx. 1,480°C.

The melting process resulted in the creation of stream of lava 1 flowing out of the shaft furnace, which then was gravitationally fed by a chute to a cascade spinner comprising four rotors 1.0, 2.0, 3.0, 4.0 with diameters of:
1 rotor 1.0 - 180 mm
2 rotor 2.0 - 250 mm
3 rotor 3.0 - 370 mm
rotor 4.0 - 370 mm,
and whose rotational speeds were:
   1 rotor 1.0 - approx. 4,000 rpm, rotating anticlockwise (looking from the front of the cascade spinner)
   2 rotor 2.0 - approx. 6,400 rpm, rotating clockwise (looking from the front of the cascade spinner)
   3 rotor 3.0 - approx. 6,800 rpm, rotating anticlockwise (looking from the front of the cascade spinner)
   4 rotor 4.0 - approx. 6,900 rpm, rotating clockwise (looking from the front of the cascade spinner).

Lava 1 obtained through the melting process was fed by a chute to first rotor 1.0, then from first rotor 1.0 to second rotor 2.0, then from second rotor 2.0 to third rotor 3.0, and then finally from third rotor 3.0 to fourth rotor 4.0.

It was determined that angle β at which stream of lava 1 entered second rotor 2.0 from first rotor 1.0 was approx. 126°.

The lava was fed to rotors 1.0, 2.0, 3.0, 4.0 of the cascade spinner in order to turn it into fibres during the fiberisation process.

To obtain the required quality of lava 1 fiberisation, plates were mounted on crowns 2.01, 3.01, 4.01 surrounding second rotor 2.0, third rotor 3.0, and fourth rotor 4.0. Their purpose was to direct the air supplied at an appropriate angle, which was used in the required formation of resulting fibres.

These plates were characterised in that they were appropriately positioned, at the required angle to the axis of the individual crown. The positions of the plates on the crowns were as follows:
- on second rotor 2.0:
   first plate 2.1, 7 pieces, inclined to the axis of crown 2.a at an angle of 0° second plate 2.2, 2 pieces, inclined to the axis of crown 2.b at an angle of 7° third plate 2.3, 2 pieces, inclined to the axis of crown 2.c at an angle of 14° fourth plate 2.4, 2 pieces, inclined to the axis of crown 2.d at an angle of 21° fifth plate 2.5, 2 pieces, inclined to the axis of crown 2.e at an angle of 28° sixth plate 2.6, 9 pieces, inclined to the axis of crown 2.f at an angle of 35°
- on third rotor 3.0:
   first plate 3.1, 15 pieces, inclined to the axis of crown 3.a at an angle of 0° second plate 3.2, 2 pieces, inclined to the axis of crown 3.b at an angle of 7° third plate 3.3, 2 pieces, inclined to the axis of crown 3.c at an angle of 14° fourth plate 3.4, 2 pieces, inclined to the axis of crown 3.d at an angle of 21° fifth plate 3.5, 2 pieces, inclined to the axis of crown 3.e at an angle of 28° sixth plate 3.6, 21 pieces, inclined to the axis of crown 3.f at an angle of 35°
- on fourth rotor 4.0:
   first plate 4.1, 16 pieces, inclined to the axis of crown 4.a at an angle of 0°
   second plate 4.2, 1 piece, inclined to the axis of crown 4.b at an angle of 10°
   third plate 4.3, 12 pieces, inclined to the axis of crown 4.c at an angle of 20°
   fourth plate 4.4, 3 pieces, inclined to the axis of crown 4.d at an angle of 30°
   fifth plate 4.5, 11 pieces, inclined to the axis of crown 4.e at an angle of 40°
   sixth plate 4.6, 1 piece, inclined to the axis of crown 4.f at an angle of 35°
   seventh plate 4.7, 2 pieces, inclined to the axis of crown 4.g at an angle of 25°
   eighth plate 4.8, 1 piece, inclined to the axis of crown 4.h at an angle of 13°
   ninth plate 4.9, 1 piece, inclined to the axis of crown 4.i at an angle of 6°.

Air flow in crowns 2.01, 3.01, 4.01 of second rotor 2.0, third rotor 3.0, and fourth rotor 4.0 was approx. 14,500 Nm³/h, while the air blow speed directly at the outlets of crowns 2.01, 3.01, 4.01 was approx. 150 m/s.

To control the temperature of four rotors 1.0, 2.0, 3.0, 4.0, a mixture of 70% of deionised water and 30% of reverse osmosis water was used, with a mixture temperature of 18°C, which was fed to rotors 1.0, 2.0, 3.0, 4.0 in the following quantities:
to first rotor 1.0 - 2.0 1/min
to second rotor 2.0 - 3.1 l/min
to third rotor 3.0 - 5.5 1/min
to fourth rotor 4.0 - 5.5 1/min.
II. The embodiment according to description I, except that:
   - raw steel slag in the amount of 3% v/v is added to the raw materials from which lava is created;
   - diameters of rotors 1.0, 2.0, 3.0, 4.0 were:
      - first rotor 1.0 - 150 mm
      - second rotor 2.0 - 200 mm
      - third rotor 3.0 - 350 mm
      - fourth rotor 4.0 - 350 mm
   - speeds of rotors 1.0, 2.0, 3.0, 4.0 were:
      - first rotor 1.0 - 4,500 rpm
      - second rotor 2.0 - 7,500 rpm
      - third rotor 3.0 - 8,000 rpm
      - fourth rotor 4.0 - 8,000 rpm
   - angle β at which the lava entered was 100°
   - on second crown 2.01 surrounding second rotor 2.0, the following plates were mounted:
      - first plates 2.1 inclined to the axis of crown 2.a at an angle of 0°
      - second plates 2.2 inclined to the axis of crown 2.b at an angle of 2°
      - third plates 2.3 inclined to the axis of crown 2.c at an angle of 9°
      - fourth plates 2.4 inclined to the axis of crown 2.d at an angle of 16°
      - fifth plates 2.5 inclined to the axis of crown 2.e at an angle of 23°
      - sixth plates 2.6 inclined to the axis of crown 2.f at an angle of 30°
   - on third crown 3.01 surrounding third rotor 3.0, the following plates were mounted:
      - first plates 3.1 inclined to the axis of crown 3.a at an angle of 0°
      - second plates 3.2 inclined to the axis of crown 3.b at an angle of 2°
      - third plates 3.3 inclined to the axis of crown 3.c at an angle of 9°
      - fourth plates 3.4 inclined to the axis of crown 3.d at an angle of 16°
      - fifth plates 3.5 inclined to the axis of crown 3.e at an angle of 23°
      - sixth plates 3.6 inclined to the axis of crown 3.f at an angle of 30°
   - on fourth crown 3.01 surrounding fourth rotor 3.0, the following plates were mounted:
      - first plates 4.1 inclined to the axis of crown 4.a at an angle of 0°
      - second plates 4.2 inclined to the axis of crown 4.b at an angle of 5°
      - third plates 4.3 inclined to the axis of crown 4.c at an angle of 15°
      - fourth plates 4.4 inclined to the axis of crown 4.d at an angle of 25°
      - fifth plates 4.5 inclined to the axis of crown 4.e at an angle of 35°
      - sixth plates 4.6 inclined to the axis of crown 4.f at an angle of 30°
      - seventh plates 4.7 inclined to the axis of crown 4.g at an angle of 20°
      - eighth plates 4.8 inclined to the axis of crown 4.h at an angle of 8°
      - ninth plates 4.9 inclined to the axis of crown 4.i at an angle of 1°
   - air flow in crowns 2.01, 3.01, 4.01 was 10,000 Nm³/h
   - the air blow speed directly at the outlets of crowns 2.01, 3.01, 4.01 was 80 m/s.
   - the water mixture consisted of 90% of deionised water and 10% of reverse osmosis water.
   - the temperature of the water mixture was 5°C.
   - the water mixture was fed to rotors 1.0, 2.0, 3.0, 4.0 in the following
      quantities: to first rotor 1.0 - 0.5 1/min
      to second rotor 2.0 - 1.5 1/min
      to third rotor 3.0 - 3.5 1/min
      to fourth rotor 4.0 - 3.5 1/min.
III. The embodiment according to description I, except that:
   - raw steel slag in the amount of 15% v/v is added to the raw materials from which lava is created;
   - diameters of rotors 1.0, 2.0, 3.0, 4.0 were:
      - first rotor 1.0 - 250 mm
      - second rotor 2.0 - 300 mm
      - third rotor 3.0 - 450 mm
      - fourth rotor 4.0 - 450 mm
   - speeds of rotors 1.0, 2.0, 3.0, 4.0 were:
      - first rotor 1.0 - 3,000 rpm
      - second rotor 2.0 - 5,000 rpm
      - third rotor 3.0 - 5,500 rpm
      - fourth rotor 4.0 - 5,500 rpm
   - angle β at which the lava entered was 150°
   - on second crown 2.01 surrounding second rotor 2.0, the following plates were mounted:
      - first plates 2.1 inclined to the axis of crown 2.a at an angle of 5°
      - second plates 2.2 inclined to the axis of crown 2.b at an angle of 12°
      - third plates 2.3 inclined to the axis of crown 2.c at an angle of 19°
      - fourth plates 2.4 inclined to the axis of crown 2.d at an angle of 26°
      - fifth plates 2.5 inclined to the axis of crown 2.e at an angle of 33°
      - sixth plates 2.6 inclined to the axis of crown 2.f at an angle of 40°
   - on third crown 3.01 surrounding third rotor 3.0, the following plates were mounted:
      - first plates 3.1 inclined to the axis of crown 3.a at an angle of 5°
      - second plates 3.2 inclined to the axis of crown 3.b at an angle of 12°
      - third plates 3.3 inclined to the axis of crown 3.c at an angle of 19°
      - fourth plates 3.4 inclined to the axis of crown 3.d at an angle of 26°
      - fifth plates 3.5 inclined to the axis of crown 3.e at an angle of 33°
      - sixth plates 3.6 inclined to the axis of crown 3.f at an angle of 40°
   - on fourth crown 3.01 surrounding fourth rotor 3.0, the following plates were mounted:
      - first plates 4.1 inclined to the axis of crown 4.a at an angle of 5°
      - second plates 4.2 inclined to the axis of crown 4.b at an angle of 15°
      - third plates 4.3 inclined to the axis of crown 4.c at an angle of 25°
      - fourth plates 4.4 inclined to the axis of crown 4.d at an angle of 35°
      - fifth plates 4.5 inclined to the axis of crown 4.e at an angle of 45°
      - sixth plates 4.6 inclined to the axis of crown 4.f at an angle of 40°
      - seventh plates 4.7 inclined to the axis of crown 4.g at an angle of 30°
      - eighth plates 4.8 inclined to the axis of crown 4.h at an angle of 18°
      - ninth plates 4.9 inclined to the axis of crown 4.i at an angle of 11°
   - air flow in crowns 2.01, 3.01, 4.01 was 20,000 Nm³/h
   - the air blow speed directly at the outlets of crowns 2.01, 3.01, 4.01 was 180 m/s.
   - the water mixture consisted of 50% of deionised water and 50% of reverse osmosis water.
   - the temperature of the water mixture was 40°C.
   - the water mixture was fed to rotors 1.0, 2.0, 3.0, 4.0 in the following
      quantities: to first rotor 1.0 - 15.0 l/min
      to second rotor 2.0 - 25.0 l/min
      to third rotor 3.0 - 30.0 l/min
      to fourth rotor 4.0 - 30.0 1/min.

## Claims

1. A method of producing stole wool of a specific composition using steel slag as a component of raw materials used for lava production, which is fed to a cascade spinner comprising rotors, which uses the centrifugal force of the rotors and the air blowing from the rotor crowns, **characterised in that, to obtain wool with a composition of:**
SiO₂ in the range of 31.16% ÷ 44.86%
Al₂O₃ in the range of: 18.12% ÷ 29.97%
CaO in the range of: 14.13% ÷ 24.81%
MgO in the range of: 5.67% ÷ 15.44%
CaO+MgO in the range of: 24.03% ÷ 37.68%
Na₂O in the range of: 0% ÷ 4.87%
K₂O in the range of: 0% ÷ 4.63%
Na₂O+K₂O in the range of: 0% ÷ 6.95%
Fe₂O₃ in the range of: 0% ÷ 11.56%
Ti02in the range of: 0% ÷ 4.32%
P₂O₅ in the range of: 0% ÷ 4.15%
SO₃ in the range of: 0% ÷ 4.78%
MnO in the range of: 0% ÷ 4.15%
BaO in the range of: 0% ÷ 4.89%
Cr₂O₃ in the range of: 0% ÷ 4.25%
SrO in the range of: 0% ÷ 4.36%
ZrO₂ in the range of: 0% ÷ 4.88%
ZnO in the range of: 0% ÷ 4.02%
PbO in the range of: 0% ÷ 3.99%
and with biological durability preventing the carcinogenic effect of wool,
raw steel slag in the amount of 3÷15 [%] v/v is added to a mixture of raw materials used for stone wool production,
and the entire mixture is melted in a furnace, after which lava (1) at a temperature of 1,350-1,550°C is gravitationally fed by a chute to a cascade spinner, comprising four rotors (1.0, 2.0, 3.0, 4.0) with diameters of:
1 rotor (1.0) - from 150 mm to 250 mm
2 rotor (2.0) - from 200 mm to 300 mm
3 rotor (3.0) - from 350 mm to 450 mm,
4 rotor (4.0) - from 350 mm to 450 mm,
to first rotor (1.0), with rotors (1.0, 2.0, 3.0, 4.0) rotating around their long axes at speeds of:
1 rotor (1.0) - from 3,000 to 4,500 rpm, rotating anticlockwise (looking from the front of the cascade spinner),
2 rotor (2.0) - from 5,000 to 7,500 rpm, rotating clockwise (looking from the front of the cascade spinner),
3 rotor (3.0) - from 5,500 to 8,000 rpm, rotating anticlockwise (looking from the front of the cascade spinner),
4 rotor (4.0) - from 5,500 to 8,000 rpm, rotating clockwise (looking from the front of the cascade spinner).
with lava (1) from first rotor (1.0) being fed to second rotor (2.0), then from second rotor (2.0) to third rotor (3.0), and then from third rotor (3.0) to fourth rotor (4.0) and angle (β) at which the stream of lava enters second rotor (2.0) from first rotor (1.0) being 100-150°, and plates are mounted on crowns (2.01, 3.01, 4.01) of second rotor (2.0), third rotor (3.0), and fourth rotor (4.0):
∘ on second rotor (2.0):
first plate (2.1), 7 pieces, inclined to the axis of crown (2.a) at an angle of 0° to 5° second plate (2.2), 2 pieces, inclined to the axis of crown (2.b) at an angle of 2° to 12° third plate (2.3), 2 pieces, inclined to the axis of crown (2.c) at an angle of 9° to 19° fourth plate (2.4), 2 pieces, inclined to the axis of crown (2.d) at an angle of 16° to 26° fifth plate (2.5), 2 pieces, inclined to the axis of crown (2.e) at an angle of 23° to 33° sixth plate (2.6), 9 pieces, inclined to the axis of crown (2.f) at an angle of 30° to 40°
∘ on third rotor (3.0):
first plate (3.1), 15 pieces, inclined to the axis of crown (3.a) at an angle of 0° to 5° second plate (3.2), 2 pieces, inclined to the axis of crown (3.b) at an angle of 2° to 12° third plate (3.3), 2 pieces, inclined to the axis of crown (3.c) at an angle of 9° to 19° fourth plate (3.4), 2 pieces, inclined to the axis of crown (3.d) at an angle of 16° to 26° fifth plate (3.5), 2 pieces, inclined to the axis of crown (3.e) at an angle of 23° to 33° sixth plate (3.6), 9 pieces, inclined to the axis of crown (3.f) at an angle of 30° to 40°
∘ on fourth rotor (4.0)
first plate (4.1), 16 pieces, inclined to the axis of crown (4.a) at an angle of 0° to 5° second plate (4.2), 1 piece, inclined to the axis of crown (4.b) at an angle of 5° to 15° third plate (4.3), 12 pieces, inclined to the axis of crown (4.c) at an angle of 15° to 25° fourth plate (4.4), 3 pieces, inclined to the axis of crown (4.d) at an angle of 25° to 35° fifth plate (4.5), 11 pieces, inclined to the axis of crown (4.e) at an angle of 35° to 45° sixth plate (4.6), 1 piece, inclined to the axis of crown (4.f) at an angle of 30° to 40° sixth plate (4.7), 2 pieces, inclined to the axis of crown (4.g) at an angle of 20° to 30° eighth plate (4.8), 1 piece, inclined to the axis of crown (4.h) at an angle of 8° to 18°
ninth plate (4.9), 1 piece, inclined to the axis of crown (4.i) at an angle of 1° to 11° to control the angle of the air supplied from the crowns of second rotor (2.0), third rotor (3.0), and fourth rotor (4.0), the flow of which in these crowns (2.01, 3.01, 4.01) is from 10,000 Nm³/h to 20,000 Nm³/h, giving air blow speed directly at the outlets of crowns (2.01, 3.01, 4.01) from 80 m/s to 180 m/s, wherein to control the temperature of four rotors (1.0, 2.0, 3.0, 4.0), a mixture of deionised water and reverse osmosis water is used, with a proportion of deionised water from 50% to 90% and of reverse osmosis water from 50% to 10% and with a mixture temperature of 5-40°C, which is fed to rotors (1.0, 2.0, 3.0, 4.0) in the following quantities:
to first rotor (1.0) - from 0.5 1/min to 15.0 l/min
to second rotor (2.0) - from 1.5 1/min to 25.0 l/min
to third rotor (3.0) - from 3.5 1/min to 30.0 l/min
to fourth rotor (4.0) - from 3.5 1/min to 30.0 1/min

2. The method according to claim 1, **characterised in that** raw steel slag in the amount of 5-10% v/v is preferably added to the raw materials from which lava is created.

3. The method according to claim 1, **characterised in that** the diameters of rotors (1.0, 2.0, 3.0, 4.0) are preferably: first rotor (1.0) - preferably from 160 mm to 200 mm
2 rotor (2.0) - preferably from 230 mm to 270 mm
3 rotor (3.0) - preferably from 350 mm to 390 mm
4 rotor (4.0) - preferably from 350 mm to 390 mm

4. The method according to claim 1, **characterised in that** the speeds of rotors (1.0, 2.0, 3.0, 4.0) are first rotor (1.0) - preferably from 3,500 to 4,500 rpm
2 rotor (2.0) - preferably from 5,500 to 6,500 rpm
3 rotor (3.0) - preferably from 6,300 to 7,200 rpm
4 rotor (4.0) - preferably from 6,500 to 7,500 rpm

5. The method according to claim 1, **characterised in that** angle (β) at which the lava enters is preferably 120-140°.

6. The method according to claim 1, **characterised in that** on second crown (2.01) surrounding second rotor (2.0), plates are mounted:
first plates (2.1), preferably inclined to the axis of crown (2.a) at an angle of 0° to 3° second plates (2.2), preferably inclined to the axis of crown (2.b) at an angle of 4° to 10° third plates (2.3), preferably inclined to the axis of crown (2.c) at an angle of 11° to 17° fourth plates (2.4), preferably inclined to the axis of crown (2.d) at an angle of 18° to 24° fifth plates (2.5), preferably inclined to the axis of crown (2.e) at an angle of 25° to 31°
sixth plates (2.6), preferably inclined to the axis of crown (2.f) at an angle of 32° to 38°

7. The method according to claim 1, **characterised in that** on third crown (3.01) surrounding third rotor (3.0), plates are mounted:
first plates (3.1), preferably inclined to the axis of crown (3.a) at an angle of 0° to 3° second plates (3.2), preferably inclined to the axis of crown (3.b) at an angle of 4° to 10° third plates (3.3), preferably inclined to the axis of crown (3.c) at an angle of 11° to 17° fourth plates (3.4), preferably inclined to the axis of crown (3.d) at an angle of 18° to 24° fifth plates (3.5), preferably inclined to the axis of crown (3.e) at an angle of 25° to 31° sixth plates (3.6), preferably inclined to the axis of crown (3.f) at an angle of 32° to 38°

8. The method according to claim 1, **characterised in that** on fourth crown (4.01) surrounding fourth rotor (4.0), plates are mounted:
first plates (4.1), preferably inclined to the axis of crown (4.a) at an angle of 0° to 3° second plates (4.2), preferably inclined to the axis of crown (4.b) at an angle of 7° to 13° third plates (4.3), preferably inclined to the axis of crown (4.c) at an angle of 17° to 23° fourth plates (4.4), preferably inclined to the axis of crown (4.d) at an angle of 27° to 33° fifth plates (4.5), preferably inclined to the axis of crown (4.e) at an angle of 37° to 43° sixth plates (4.6), preferably inclined to the axis of crown (4.f) at an angle of 32° to 38° seventh plates (4.7), preferably inclined to the axis of crown (4.g) at an angle of 22° to 28° eighth plates (4.8), preferably inclined to the axis of crown (4.h) at an angle of 10° to 16° ninth plates (4.9), preferably inclined to the axis of crown (4.i) at an angle of 3° to 9°

9. The method according to claim 1, **characterised in that** air flow in crowns (2.01, 3.01, 4.01) is preferably from 12,000 Nm³/h to 18,000 Nm³/h.

10. The method according to claim 1, **characterised in that** air blow speed directly at the outlets of crowns (2.01, 3.01, 4.01) is preferably from 100 m/s to 160 m/s.

11. The method according to claim 1, **characterised in that** the water mixture consists preferably of 70-90% of deionised water and 30-10% of reverse osmosis water.

12. The method according to claim 1, **characterised in that** the temperature of the water mixture is preferably 10-30°C.

## Patentansprüche

1. Verfahren zur Herstellung von Steinwolle mit einer bestimmten Zusammensetzung unter Verwendung von Stahlwerksschlacke als Bestandteil von Rohstoffen, die bei der Herstellung von Lava verwendet werden, die einer Kaskaden-Spinnmaschine mit Rotoren zugeführt wird, die eine Zentrifugalkraft der Rotoren und einen aus der Rotorkränzen austretenden Luftstoß ausnutzt, **dadurch gekennzeichnet, dass** zum Erhalten der Wolle mit der Zusammensetzung:
SiO₂ im Bereich: 31,16% ÷ 44,86%
Al₂O₃ im Bereich: 18,12% ÷ 29,97%
CaO im Bereich: 14,13% ÷ 24,81%
MgO im Bereich: 5,67% ÷ 15,44%
CaO + MgO im Bereich: 24,03% ÷ 37,68%
Na₂O im Bereich: 0% ÷ 4,87%
K₂O im Bereich: 0% ÷ 4,63%
Na₂O+K₂O im Bereich: 0% ÷ 6,95%
Fe₂O₃ im Bereich: 0% ÷ 11,56%
TiO₂ im Bereich: 0% ÷ 4,32%
P₂O₅ im Bereich: 0% ÷ 4,15%
SO₃ im Bereich: 0% ÷ 4,78%
MnO im Bereich: 0% ÷ 4,15%
BaO im Bereich: 0% ÷ 4,89%
Cr₂O₃ im Bereich: 0% ÷ 4,25%
SrO im Bereich: 0% ÷ 4,36%
ZrO₂ im Bereich: 0% ÷ 4,88%
ZnO im Bereich: 0% ÷ 4,02%
PbO im Bereich: 0% ÷ 3,99%
und mit biologischer Beständigkeit zur Verhinderung der krebserregenden Wirkung der Wolle
einem Rohstoffgemisch, das zur Herstellung von Steinwolle verwendet wird, die Rohstahlschlacke in einer Menge von 3÷15 [%] v/v zugesetzt wird,
und die Gesamtheit in einem Ofen geschmolzen wird, dann die gebildete Lava (1) mit einer Temperatur von 1350 °C bis 1550 °C durch Gravitation über eine Rinne zu einer Kaskaden-Spinnmaschine, die vier Rotoren (1.0, 2.0, 3.0, 4.0) mit folgenden Durchmessern enthält:
1. Rotor (1.0) - von 150 mm bis 250 mm
2. Rotor (2.0) - von 200 mm bis 300 mm
3. Rotor (3.0) - von 350 mm bis 450 mm
4. Rotor (4.0) - von 350 mm bis 450 mm
auf einen ersten Rotor (1.0) geleitet wird, wobei die Rotoren (1.0, 2.0, 3.0, 4.0) um ihre Längsachsen mit folgenden Geschwindigkeiten rotieren:
1. Rotor (1.0) - von 3000 bis 4500 1/min, mit Linksdrehung (vom Stirn der Kaskaden-Spinnmaschine aus gesehen),
2. Rotor (2.0) - von 5000 bis 7500 1/min, mit Rechtsdrehung (vom Stirn der Kaskaden-Spinnmaschine aus gesehen),
3. Rotor (3.0) - von 5500 bis 8000 1/min, mit Linksdrehung (vom Stirn der Kaskaden-Spinnmaschine aus gesehen),
4. Rotor (4.0) - von 5500 bis 8000 1/min, mit Rechtsdrehung (vom Stirn der Kaskaden-Spinnmaschine aus gesehen),
wobei die Lava (1) von einem ersten Rotor (1.0) auf einen zweiten Rotor (2.0), von diesem auf einen dritten Rotor (3.0), vom dritten auf einen vierten Rotor (4.0) geleitet wird, wobei der Fallwinkel (β) des Lavastrahls vom ersten Rotor (1.0) auf den zweiten Rotor (2.0) von 100° bis 150° beträgt, und an den Rotoren vom zweiten bis zum vierten (2.0, 3.0, 4.0), an den Kränzen (2.01, 3.01, 4.01) dieser Rotoren die Plättchen montiert werden:
o an zweitem Rotor (2.0):
erstes Plättchen (2.1), in der Anzahl von 7 Stück, unter einem Winkel von 0° bis 5° zur Kranzachse (2.a) geneigt
zweites Plättchen (2.2), in der Anzahl von 2 Stück, unter einem Winkel von 2° bis 12° zur Kranzachse (2.b) geneigt
drittes Plättchen (2.3), in der Anzahl von 2 Stück, unter einem Winkel von 9° bis 19° zur Kranzachse (2.c) geneigt
viertes Plättchen (2.4), in der Anzahl von 2 Stück, unter einem Winkel von 16° bis 26° zur Kranzachse (2.d) geneigt
fünftes Plättchen (2.5), in der Anzahl von 2 Stück, unter einem Winkel von 23° bis 33° zur Kranzachse (2.e) geneigt
sechstes Plättchen (2.6), in der Anzahl von 9 Stück, unter einem Winkel von 30° bis 40° zur Kranzachse (2.f) geneigt
o an drittem Rotor (3.0):
erstes Plättchen (3.1), in der Anzahl von 15 Stück, unter einem Winkel von 0° bis 5° zur Kranzachse (3.a) geneigt
zweites Plättchen (3.2), in der Anzahl von 2 Stück, unter einem Winkel von 2° bis 12° zur Kranzachse (3.b) geneigt
drittes Plättchen (3.3), in der Anzahl von 2 Stück, unter einem Winkel von 9° bis 19° zur Kranzachse (3.c) geneigt
viertes Plättchen (3.4), in der Anzahl von 2 Stück, unter einem Winkel von 16° bis 26° zur Kranzachse (3.d) geneigt
fünftes Plättchen (3.5), in der Anzahl von 2 Stück, unter einem Winkel von 23° bis 33° zur Kranzachse (3.e) geneigt
sechstes Plättchen (3.6), in der Anzahl von 21 Stück, unter einem Winkel von 30° bis 40° zur Kranzachse (3.f) geneigt
o an viertem Rotor (4.0)
erstes Plättchen (4.1), in der Anzahl von 16 Stück, unter einem Winkel von 0° bis 5° zur Kranzachse (4.a) geneigt
zweites Plättchen (4.2), in der Anzahl von 1 Stück, unter einem Winkel von 5° bis 15° zur Kranzachse (4.b) geneigt
drittes Plättchen (4.3), in der Anzahl von 12 Stück, unter einem Winkel von 15° bis 25° zur Kranzachse (4.c) geneigt
viertes Plättchen (4.4), in der Anzahl von 3 Stück, unter einem Winkel von 25° bis 35° zur Kranzachse (4.d) geneigt
fünftes Plättchen (4.5), in der Anzahl von 11 Stück, unter einem Winkel von 35° bis 45° zur Kranzachse (4.e) geneigt
sechstes Plättchen (4.6), in der Anzahl von 1 Stück, unter einem Winkel von 30° bis 40° zur Kranzachse (4.f) geneigt
siebtes Plättchen (4.7), in der Anzahl von 2 Stück, unter einem Winkel von 20° bis 30° zur Kranzachse (4.g) geneigt
achtes Plättchen (4.8), in der Anzahl von 1 Stück, unter einem Winkel von 8° bis 18° zur Kranzachse (4.h) geneigt
neuntes Plättchen (4.9), in der Anzahl von 1 Stück, unter einem Winkel von 1° bis 11° zur Kranzachse (4.i) geneigt
um die Winkel der von den Kränzen des zweiten (2.0), des dritten (3.0) und des vierten Rotors (4.0) zugeführten Luft zu kontrollieren, deren Durchfluss in diesen Kränzen (2.01, 3.01, 4.01) von 10 000 Nm³/h bis 20 000 Nm³/h beträgt, woraus sich die Luftstoßgeschwindigkeit direkt an den Luftaustritten aus den Kränzen (2.01, 3.01, 4.01) im Bereich von 80 m/s bis 180 m/s ergibt, wobei zur Temperaturkontrolle von vier Rotoren (1.0, 2.0, 3.0, 4.0) ein Gemisch aus demineralisiertem Wasser und aus Wasser nach Umkehrosmose, mit einem Anteil an demineralisiertem Wasser von 50% bis 90% und entsprechend an Wasser nach Umkehrosmose von 50% bis 10%, bei der Temperatur des Gemisches von 5 °C bis 40 °C verwendet wird, das in der folgenden Mengen auf die Rotoren (1.0, 2.0, 3.0, 4.0) zugeführt wird:
auf 1. Rotor (1.0) - von 0,5 1/min bis 15,0 l/min
auf 2. Rotor (2.0) - von 1,5 1/min bis 25,0 1/min
auf 3. Rotor (3.0) - von 3,5 1/min bis 30,0 1/min
auf 4. Rotor (4.0) - von 3,5 1/min bis 30,0 1/min

2. Verfahren nach Anspruch 1, **dadurch gekennzeichnet, dass** die Stahlwerksschlacke in Rohform vorzugsweise im Anteil von 5% bis 10% v/v den Rohstoffen, aus denen die Lava erzeugt wird, zugesetzt wird.

3. Verfahren nach Anspruch 1, **dadurch gekennzeichnet, dass** die Durchmesser der Rotoren (1.0, 2.0, 3.0, 4.0) betragen:
1. Rotor (1.0) - bevorzugt von 160 mm bis 200 mm
2. Rotor (2.0) - bevorzugt von 230 mm bis 270 mm
3. Rotor (3.0) - bevorzugt von 350 mm bis 390 mm
4. Rotor (4.0) - bevorzugt von 350 mm bis 390 mm

4. Verfahren nach Anspruch 1, **dadurch gekennzeichnet, dass** die Drehzahlen der Rotoren (1.0, 2.0, 3.0, 4.0) betragen:
1. Rotor (1.0) - bevorzugt von 3500 bis 4500 l/min
2. Rotor (2.0) - bevorzugt von 5500 bis 6500 1/min
3. Rotor (3.0) - bevorzugt von 6300 bis 7200 1/min
4. Rotor (4.0) - bevorzugt von 6500 bis 7500 1/min

5. Verfahren nach Anspruch 1, **dadurch gekennzeichnet, dass** der Fallwinkel (β) von Lava vorzugsweise von 120° bis 140° beträgt.

6. Verfahren nach Anspruch 1, **dadurch gekennzeichnet, dass** an dem zweiten Kranz (2.01), der den zweiten Rotor (2.0) umgibt, die Plättchen montiert werden:
erste Plättchen (2.1) bevorzugt unter einem Winkel von 0° bis 3° zur Kranzachse (2.a) geneigt
zweite Plättchen (2.2) bevorzugt unter einem Winkel von 4° bis 10° zur Kranzachse (2.b) geneigt
dritte Plättchen (2.3) bevorzugt unter einem Winkel von 11° bis 17° zur Kranzachse (2.c) geneigt
vierte Plättchen (2.4) bevorzugt unter einem Winkel von 18° bis 24° zur Kranzachse (2.d) geneigt
fünfte Plättchen (2.5) bevorzugt unter einem Winkel von 25° bis 31° zur Kranzachse (2.e) geneigt
sechste Plättchen (2.6) bevorzugt unter einem Winkel von 32° bis 38° zur Kranzachse (2.f) geneigt

7. Verfahren nach Anspruch 1, **dadurch gekennzeichnet, dass** an dem dritten Kranz (3.01), der den dritten Rotor (3.0) umgibt, die Plättchen montiert werden:
erste Plättchen (3.1) bevorzugt unter einem Winkel von 0° bis 3° geneigt zweite Plättchen (3.2) bevorzugt unter einem Winkel von 4° bis 10° geneigt dritte Plättchen (3.3) bevorzugt unter einem Winkel von 11° bis 17° geneigt vierte Plättchen (3.4) bevorzugt unter einem Winkel von 18° bis 24° geneigt fünfte Plättchen (3.5) bevorzugt unter einem Winkel von 25° bis 31° geneigt sechste Plättchen (3.6) bevorzugt unter einem Winkel von 32° bis 38° geneigt

8. Verfahren nach Anspruch 1, **dadurch gekennzeichnet, dass** an dem vierten Kranz (4.01), der den vierten Rotor (4.0) umgibt, die Plättchen montiert werden:
erste Plättchen (4.1) bevorzugt unter einem Winkel von 0° bis 3° geneigt zweite Plättchen (4.2) bevorzugt unter einem Winkel von 7° bis 13° geneigt dritte Plättchen (4.3) bevorzugt unter einem Winkel von 17° bis 23° geneigt vierte Plättchen (4.4) bevorzugt unter einem Winkel von 27° bis 33° geneigt fünfte Plättchen (4.5) bevorzugt unter einem Winkel von 37° bis 43° geneigt sechste Plättchen (4.6) bevorzugt unter einem Winkel von 32° bis 38° geneigt siebte Plättchen (4.7) bevorzugt unter einem Winkel von 22° bis 28° geneigt achte Plättchen (4.8) bevorzugt unter einem Winkel von 10° bis 16° geneigt neunte Plättchen (4.9) bevorzugt unter einem Winkel von 3° bis 9° geneigt

9. Verfahren nach Anspruch 1, **dadurch gekennzeichnet, dass** der Luftdurchfluss in den Kränzen (2.01, 3.01, 4.01) vorzugsweise von 12 000 Nm³/h bis 18 000 Nm³/h beträgt.

10. Verfahren nach Anspruch 1, **dadurch gekennzeichnet, dass** die Luftstoßgeschwindigkeit direkt an den Luftaustritten aus den Kränzen (2.01, 3.01, 4.01) vorzugsweise von 100 m/s bis 160 m/s beträgt.

11. Verfahren nach Anspruch 1, **dadurch gekennzeichnet, dass** die Wassermischung vorzugsweise aus 70% bis 90% des demineralisierten Wassers und entsprechend von 30% bis 10% des Wassers nach Umkehrosmose besteht.

12. Verfahren nach Anspruch 1, **dadurch gekennzeichnet, dass** die Wassermischung vorzugsweise eine Temperatur von 10 °C bis 30 °C aufweist.

## Revendications

1. Procédé de production de la laine de roche d'une composition spécifique, en utilisant des scories d'aciérie comme composant des matières premières utilisées dans la production de lave, qui est introduite dans un métier à filer en cascade avec des rotors utilisant la force centrifuge des rotors et un souffle d'air sortant des couronnes des rotors, **caractérisé en ce que,** pour obtenir de la laine ayant la composition suivante :
SiO₂ compris entre : 31,16 % ÷ 44,86 %
Al₂O₃ compris entre : 18,12 % ÷ 29,97 %
CaO compris entre : 14,13 % ÷ 24,81 %
MgO compris entre : 5,67 % ÷ 15,44 %
CaO+MgO compris entre : 24,03 % ÷ 37,68 %
Na₂O compris entre : 0 % ÷ 4,87 %
K₂O compris entre : 0 % ÷ 4,63 %
Na₂O+K₂O compris entre : 0 % ÷ 6,95 %
Fe₂O₃ compris entre : 0 % ÷ 11,56 %
TiO₂ compris entre : 0 % ÷ 4,32 %
P₂O₅ compris entre : 0 % ÷ 4,15 %
SO₃ compris entre : 0 % ÷ 4,78 %
MnO compris entre : 0 % ÷ 4,15 %
BaO compris entre : 0 % ÷ 4,89 %
Cr₂O₃ compris entre : 0 % ÷ 4,25 %
SrO compris entre : 0 % ÷ 4,36 %
ZrO₂ compris entre : 0 % ÷ 4,88 %
ZnO compris entre : 0 % ÷ 4,02 %
PbO compris entre : 0 % ÷ 3,99 %
et d'une stabilité biologique permettant de prévenir les effets cancérigènes de la laine des scories d'acier, sous forme brute, dans une quantité de 3÷15 [%] v/v sont ajoutées au mélange de matières premières utilisé pour la production de laine de roche,
et le tout est fondu dans un four, après quoi la lave (1) formée, à une température de 1350 °C à 1550 °C, est dirigée par gravité à travers une goulotte vers une machine à filer en cascade contenant quatre rotors (1.0, 2.0, 3.0, 4.0), avec les diamètres suivants :
1^{er} rotor (1.0) - de 150 mm à 250 mm
2^{ème} rotor (2.0) - de 200 mm à 300 mm
3^{ème} rotor (3.0) - de 350 mm à 450 mm
4^{ème} rotor (4.0) - de 350 mm à 450 mm
au premier rotor (1.0), les rotors (1.0, 2.0, 3.0, 4.0) tournant autour de leurs axes longs à des vitesses :
1^{er} rotor (1.0) - 3000 à 4500 tr/min, rotation dans le sens inverse des aiguilles d'une montre (en regardant de l'avant de la machine à filer en cascade),
2^{ème} rotor (2.0) - de 5000 à 7500 tr/min, rotation dans le sens des aiguilles d'une montre (en regardant de l'avant de la machine à filer en cascade),
3^{ème} rotor (3.0) - 5500 à 8000 tr/min, rotation dans le sens inverse des aiguilles d'une montre (en regardant de l'avant de la machine à filer en cascade),
4^{ème} rotor (4.0) - 5500 à 8000 tr/min, rotation dans le sens des aiguilles d'une montre (en regardant de l'avant de la machine à filer en cascade),
la lave (1) provenant du premier rotor (1.0) est dirigée vers le deuxième rotor (2.0), du deuxième rotor (2.0) vers le troisième rotor (3.0) et du troisième rotor vers le quatrième rotor (4.0), l'angle (β) de la coulée de lave du premier rotor (1.0) au deuxième rotor (2.0) étant de 100° à 150° et sur les deuxième à quatrième rotors (2.0, 3.0, 4.0), sur les couronnes (2.01, 3.01, 4.01) de ces rotors, on monte des platines :
o sur le deuxième rotor (2.0) :
la première platine (2.1), au nombre de 7 pièces, inclinée par rapport à l'axe de la couronne (2.a) selon un angle de 0° à 5°
la deuxième platine (2.2), au nombre de 2 pièces, inclinée par rapport à l'axe de la couronne (2.b) selon un angle de 2° à 12°
la troisième platine (2.3), au nombre de 2 pièces, inclinée par rapport à l'axe de la couronne (2.c) selon un angle de 9° à 19°
la quatrième platine (2.4), au nombre de 2 pièces, inclinée par rapport à l'axe de la couronne (2.d) selon un angle de 16° à 26°
la cinquième platine (2.5), au nombre de 2 pièces, inclinée par rapport à l'axe de la couronne (2.e) selon un angle de 23° à 33°
la sixième platine (2.6), au nombre de 9 pièces, inclinée par rapport à l'axe de la couronne (2.f) selon un angle de 30° à 40°
o sur le troisième rotor (3.0) :
la première platine (3.1), au nombre de 15 pièces, inclinée par rapport à l'axe de la couronne (3.a) selon un angle de 0° à 5°
la deuxième platine (3.2), au nombre de 2 pièces, inclinée par rapport à l'axe de la couronne (3.b) selon un angle de 2° à 12°
la troisième platine (3.3), au nombre de 2 pièces, inclinée par rapport à l'axe de la couronne (3.c) selon un angle de 9° à 19°
la quatrième platine (3.4), au nombre de 2 pièces, inclinée par rapport à l'axe de la couronne (3.d) selon un angle de 16° à 26°
la cinquième platine (3.5), au nombre de 2 pièces, inclinée par rapport à l'axe de la couronne (3.e) selon un angle de 23° à 33°
la sixième platine (3.6), au nombre de 21 pièces, inclinée par rapport à l'axe de la couronne (3.f) selon un angle de 30° à 40°
o sur le quatrième rotor (4.0) :
la première platine (4.1), au nombre de 16 pièces, inclinée par rapport à l'axe de la couronne (4.a) selon un angle de 0° à 5°
la deuxième platine (4.2), au nombre de 1 pièce, inclinée par rapport à l'axe de la couronne (4.b) selon un angle de 5° à 15°
la troisième platine (4.3), au nombre de 12 pièces, inclinée par rapport à l'axe de la couronne (4.c) selon un angle de 15° à 25°
la quatrième platine (4.4), au nombre de 3 pièces, inclinée par rapport à l'axe de la couronne (4.d) selon un angle de 25° à 35°
la cinquième platine (4.5), au nombre de 11 pièces, inclinée par rapport à l'axe de la couronne (4.e) selon un angle de 35° à 45°
la sixième platine (4.6), au nombre de 1 pièce, inclinée par rapport à l'axe de la couronne (4.f) selon un angle de 30° à 40°
la septième platine (4.7), au nombre de 2 pièces, inclinée par rapport à l'axe de la couronne (4.g) selon un angle de 20° à 30°
la huitième platine (4.8), au nombre de 1 pièce, inclinée par rapport à l'axe de la couronne (4.h) selon un angle de 8° à 18°
la neuvième platine (4.9), au nombre de 1 pièce, inclinée par rapport à l'axe de la couronne (4.i) selon un angle de 1° à 11°
pour contrôler les angles de l'air fourni par les couronnes du deuxième (2.0), troisième (3.0) et quatrième (4.0) rotor, dont le débit dans lesdites couronnes (2.01, 3.01, 4.01) est compris entre 10 000 Nm³/h et 20 000 Nm³/h, ce qui donne une vitesse d'air soufflant directement sur les sorties des couronnes (2.01, 3.01, 4.01) à un niveau de 80 m/s à 180 m/s, pour le contrôle de la température des quatre rotors (1.0, 2.0, 3.0, 4.0), étant utilisé un mélange d'eau déminéralisée et d'eau de réosmose, avec une proportion d'eau déminéralisée de 50 % à 90 % et respectivement d'eau de réosmose de 50 % à 10 %, à une température de mélange de 5 °C à 40 °C, alimentant les rotors (1.0, 2.0, 3.0, 4.0) dans les quantités suivantes :
sur le 1^{er} rotor (1.0) - de 0,5 1/min à 15,0 l/min
sur le 2^{ème} rotor (2.0) - de 1,5 1/min à 25,0 l/min
sur le 3^{ème} rotor (3.0) - de 3,5 1/min à 30,0 l/min
sur le 4^{ème} rotor (4.0) - de 3,5 1/min à 30,0 l/min

2. Procédé selon la revendication 1, **caractérisé en ce qu'à** la scorie d'aciérie, sous forme brute, il est ajouté de préférence de 5 % à 10 % v/v des matières premières à partir desquelles la lave est produite.

3. Procédé selon la revendication 1, **caractérisé en ce que** les diamètres des rotors (1.0, 2.0, 3.0, 4.0) sont les suivants :
1^{er} rotor (1.0) - de préférence de 160 mm à 200 mm
2^{ème} rotor (2.0) - de préférence de 230 mm à 270 mm
3^{ème} rotor (3.0) - de préférence de 350 mm à 390 mm
4^{ème} rotor (4.0) - de préférence de 350 mm à 390 mm

4. Procédé selon la revendication 1, **caractérisé en ce que** les rotations des rotors (1.0, 2.0, 3.0, 4.0) sont les suivantes :
1^{er} rotor (1.0) - de préférence entre 3500 et 4500 tr/min.
2^{ème} rotor (2.0) - de préférence entre 5500 et 6500 tr/min.
3^{ème} rotor (3.0) - de préférence entre 6300 et 7200 tr/min.
4^{ème} rotor (4.0) - de préférence entre 6500 et 7500 tr/min.

5. Procédé selon la revendication 1, **caractérisé en ce que** l'angle de chute de la lave (β) est compris de préférence entre 120° et 140°.

6. Procédé selon la revendication 1, **caractérisé en ce que** sur la deuxième couronne (2.01), entourant le deuxième rotor (2.0), on monte les platines suivantes :
les premières platines (2.1) inclinées par rapport à l'axe de la couronne (2.a) de préférence selon un angle de 0° à 3°
les deuxièmes platines (2.2) inclinées par rapport à l'axe de la couronne (2.b) de préférence selon un angle de 4° à 10°
les troisièmes platines (2.3) inclinées par rapport à l'axe de la couronne (2.c) de préférence selon un angle de 11° à 17°
les quatrièmes platines (2.4) inclinées par rapport à l'axe de la couronne (2.d) de préférence selon un angle de 18° à 24°
les cinquièmes platines (2.5) inclinées par rapport à l'axe de la couronne (2.e) de préférence selon un angle de 25° à 31°
les sixièmes platines (2.6) inclinées par rapport à l'axe de la couronne (2.f) de préférence selon un angle de 32° à 38°

7. Procédé selon la revendication 1, **caractérisé en ce que** sur la troisième couronne (3.01) entourant le troisième rotor (3.0), on monte les platines suivantes :
les premières platines (3.1) inclinées de préférence selon un angle de 0° à 3° les deuxièmes platines (3.2) inclinées de préférence selon un angle de 4° à 10° les troisièmes platines (3.3) inclinées de préférence selon un angle de 11° à 17° les quatrièmes platines (3.4) inclinées de préférence selon un angle de 18° à 24° les cinquièmes platines (3.5) inclinées de préférence selon un angle de 25° à 31° les sixièmes platines (3.6) inclinées de préférence selon un angle de 32° à 38°

8. Procédé selon la revendication 1, **caractérisé en ce que** sur la quatrième couronne (4.01) entourant le quatrième rotor (4.0), on monte les platines suivantes :
les premières platines (4.1) inclinées de préférence selon un angle de 0° à 3° les deuxièmes platines (4.2) inclinées de préférence selon un angle de 7° à 13° les troisièmes platines (4.3) inclinées de préférence selon un angle de 17° à 23° les quatrièmes platines (4.4) inclinées de préférence selon un angle de 27° à 33° les cinquièmes platines (4.5) inclinées de préférence selon un angle de 37° à 43° les sixièmes platines (4.6) inclinées de préférence selon un angle de 32° à 38° les septièmes platines (4.7) inclinées de préférence selon un angle de 22° à 28° les huitièmes platines (4.8) inclinées de préférence selon un angle de 10° à 16° les neuvièmes platines (4.9) inclinées de préférence selon un angle de 3° à 9°

9. Procédé selon la revendication 1, **caractérisé en ce que** le débit d'air dans les couronnes (2.01, 3.01, 4.01) est compris de préférence entre 12 000 Nm³/h et 18 000 Nm³/h.

10. Procédé selon la revendication 1, **caractérisé en ce que** la vitesse de soufflage de l'air directement aux sorties des couronnes (2.01, 3.01, 4.01) est comprise de préférence entre 100 m/s et 160 m/s.

11. Procédé selon la revendication 1, **caractérisé en ce que** le mélange d'eau comprend de préférence de 70 % à 90 % d'eau déminéralisée et respectivement de 30 % à 10 % d'eau de réosmose.

12. Procédé selon la revendication 1, **caractérisé en ce que** le mélange d'eau a de préférence une température de 10 °C à 30 °C.
